# EUROPEAN PATENT SPECIFICATION

(11) **EP 2 804 272 B1**
(45) Date of publication and mention of the grant of the patent: **06.12.2017**
(21) Application number: 13735684.6
(22) Date of filing: 10.01.2013
(51) Int. Cl.: H02B 1/52, H02G 11/02, H02B 3/00, H02G 1/06

(54) **MOBILE UNIT FOR HIGH- AND MEDIUM-VOLTAGE ELECTRICAL INTERCONNECTION**
MOBILE EINHEIT FÜR ELEKTRISCHE VERNETZUNGEN MIT HOHER UND MITTLERER SPANNUNG
UNITÉ MOBILE D'INTERCONNEXION ÉLECTRIQUE À HAUTE ET MOYENNE TENSION

(30) Priority: 13.01.2012 ES 201230038
(43) Date of publication of application: 19.11.2014
(73) Proprietor: Corporative International R&H Europe, S.L., 28916 Leganes (Madrid) (ES); Union Fenosa Distribucion, S.A., 28033 Madrid (ES)
(72) Inventor: ROMERO HURTADO, Francisco, E-28916 Leganes (Madrid) (ES)
(74) Representative: Munoz Garcia, Antonio
(86) International application number: PCT/ES2013/070002
(87) International publication number: WO 2013/104814

(56) References cited:
- BR-U- MU8 502 193
- BR-U- MU8 502 193
- CN-U- 201 656 308
- CN-U- 201 937 194
- CN-U- 201 937 194
- JP-A- 2008 067 597
- US-A1- 2007 045 073
- US-A1- 2007 230 094

## Description

### Object of the Invention

As expressed in the title of the present specification, the invention relates to a mobile unit for high- and medium-voltage electrical interconnection, providing several advantages and novel characteristics to its intended function which will be described in detail below and involve significant improvement with respect to systems known today for the same purpose.

More particularly, the object of the invention focuses on a mobile unit designed to act as a connecting extension piece or jumper for transporting electric current between an electrically connected point and another point to be electrically connected, providing a practical and efficient system for situations where mobile work units in which circuits lacking current must be powered from an external auxiliary point break down, require maintenance or a power supply.

### Field of Application of the Invention

The field of application of the present invention is encompassed within the electrical energy sector, focusing on the field of connection systems for high- and medium-voltage power supply.

### Background of the Invention

Today and as a reference to the state of the art, it must be pointed out that the applicant is unaware of the existence of any other mobile unit for high- and medium-voltage electrical interconnection or an invention with a similar application having technical, structural and constitutive features similar to those provided by the invention herein proposed and claimed.

It must be mentioned that the applicant is aware of some related documents which describe similar devices, among which the following must be mentioned:
- patent CN 201937194U U (XUZHOU HANDLER SPECIAL VEHICLE CO LTD) representing the state of the art closest to the claimed invention and describing a load switch car for high-voltage electrical interconnection having spools of cables and fixed connections formed by plugs coupled to the reel and free connections that can be plugged into the free tip of the cable as well as the earthing equipment.
- patent JP 2008067597 A (SWCC SHOWA CABLE SYS CO LTD) describes a connector and a cable termination for using this connector, including a biconic connector.
- BR MU8502193U U (RIBEIRO EVERARDO NORONHA) relates to a mobile electrical sub-station of the type herein discussed and having a wire screen and an equipotential ring. The earthing equipment is in contact with the structure of the trailer and has an earth reel with insulated copper cable.
- US 2007230094 A1 (CARLSON CURT S) relates to a mobile power supply unit having several reels onto which the conductor cable is wound.

However, among other essential differences, none of said inventions indicates the presence of interconnecting jumpers or that the reels are joined to one another by connecting rods or are supported on semicircular supports as herein disclosed. In summary, one of said inventions describes a mobile unit such as that claimed herein.

### Brief Description of the Invention

Specifically, as described above the invention proposes a mobile unit for high- and medium-voltage electrical interconnection applicable as a jumper for electric current between two points, allowing transporting energy, for example, from a transformer to a line with a transformer that has broken down or is under maintenance, from a transformation center to another center, to another transformer or to another circuit, from a generator to a circuit or mobile machinery, from a sub-station to a center or vice versa, etc.

To that end, the mobile unit, as fully defined in claim 1, consists of a trailer supporting rotary cylinders acting as a reel onto which a high-voltage cable is wound, the ends or tips of which have been suitably prepared with special connecting parts (high-voltage plugs).

Furthermore, said trailer incorporates a cabinet where different auxiliary elements are stored, such as rollers for laying cables more easily; cable protectors to prevent cables from being crushed by vehicles when they are arranged across the road; auxiliary jumpers that are connected to the tips of the cables to couple different types of connection that the user may encounter; and earthing and safety tools.

Therefore, one of the tips of the cable is connected to the terminals designed for connection to the power tapping point, and the other tip is plugged into the terminals to be powered or to which energy is to be transported.

The mobile cable tip, i.e., the end of the cable which is elongated, preferably incorporates the input plugs, this end being the end approaching the power supply point; whereas the opposite end of the cable, which is the tip fixed to the reel, incorporates the output plugs and the cable from the center to be powered is connected thereto, being able to be optionally interconnected with the cable of another reel either provided in the same mobile unit or belonging to another mobile unit, thereby allowing further elongating the distances to be connected.

As a result, the proposed mobile unit can consist of one, two or more reels which are interconnected to one another and can in turn be connected with other mobile units.

To that end, the reels are incorporated on supports, each of which comprises two semi-circular modules joined to one another by rotating rollers and has interconnecting jumpers for connecting, when they are incorporated, two or more reels to one another, as well as removable connecting rods making their movement integral with one another, and when the reels (3) are disconnected, each reel works independently.

In view of the foregoing, it must be stated that the mobile unit for high- and medium-voltage electrical interconnection represents an innovation of features unknown until now for such purpose, which reasons along with its practical usefulness give it sufficient grounds for obtaining the exclusive privilege that is sought.

### Description of the Drawings

To complement the description that is being made with respect to the mobile unit of the invention and to aid in better understanding the features distinguishing it, a set of drawings is attached to the present specification as an integral part thereof in which the following is depicted with an illustrative and non-limiting character:

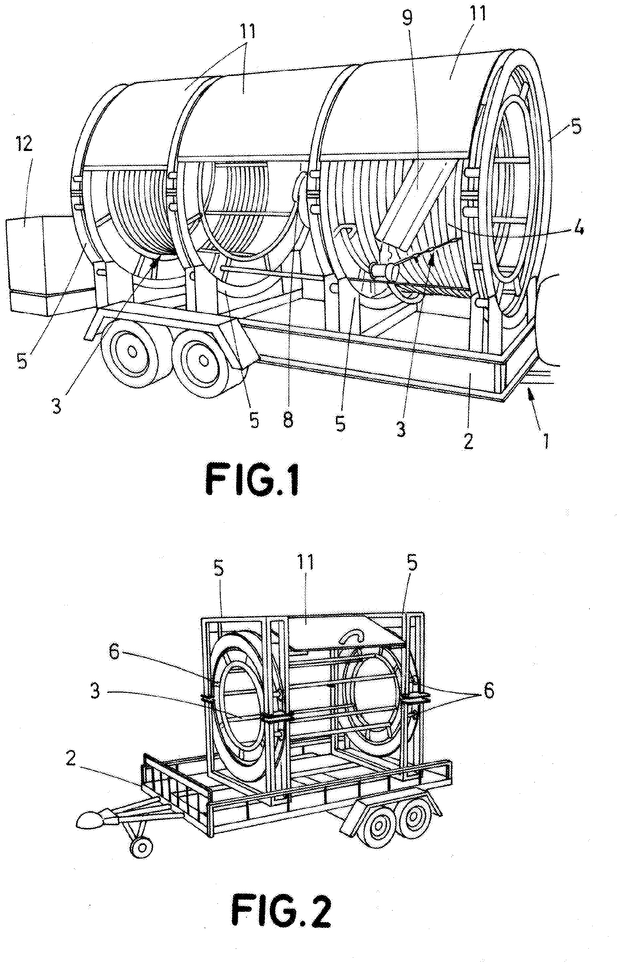

Figure 1 shows a perspective view of an embodiment of the mobile unit for high- and medium-voltage electrical interconnection object of the invention, the main parts and elements that it comprises as well as the configuration and arrangement thereof being observed therein.
Figures 2 and 3 show respective perspective views of two examples of trailer and structure of the mobile unit of the invention, for one and for two reels, respectively, the distribution thereof being clearly seen without the cable being depicted.
Figures 4 and 5 show respective elevational views of a biconic connector and a connection between female terminals with said biconic connector, respectively, that are used for interconnecting each of the phases of the 3-pole cable to the interconnecting jumpers between reels.
Figure 6 shows a perspective view of the detail of the platform supporting the fixed connections of the reels, depicted with the terminals incorporating interconnecting jumpers with biconic connectors and clamps securing them.
Figure 7 shows the support platform having fixed connections, shown in the preceding figure, empty such that the grooves provided therein to enable sliding the terminals in the assembling and disassembling operations are seen.
Figure 8 shows a detail of the joining of the earth wires of the cables.
Figure 9 shows a detail of the connection of the earth wires to the equipotential ring surrounding the mobile unit with a clip.
Figure 10 shows a partial perspective view of the example of the mobile unit shown in Figure 1, the interconnecting jumper for interconnection between the two reels that it incorporates, as well as the blanket protector for protecting said interconnection and the connecting rods between reels being observed therein, among other details.
Figure 11 shows a detail of the trifurcated free end of the 3-pole cable incorporated in the mobile unit, the plug-in terminals that are incorporated to same being observed.
Figure 12 shows a schematic diagram of the mobile unit of the invention in which the equipotential ring and the earth reel are depicted.

### Preferred Embodiment of the Invention

In view of the mentioned drawings and according to the adopted numbering, a preferred embodiment of the invention which comprises the parts and elements that are described in detail below can be observed therein.

Therefore, as observed in said drawings, the mobile unit (1) at hand comprises the following:
- A trailer (2) on which the rest of the elements forming the equipment are supported, consisting of a conventional trailer sized according to the needs of each case, particularly to the number and size of the reels of the unit.
- One or more freely rotating metal reels (3) responsible for supporting the conductor cable (4) which is wound onto them and for allowing winding and unwinding said cable (4). This cable (4) is preferably a 12/20 KV, 24,000 V highly flexible 3-pole cable of 3 x 70 + 3 x 35 Cu formed by three strands, one for each phase, such that the ends thereof are trifurcated into three independent tips.

- Supports (5) forming the structure where the reels are incorporated, each of which comprises two semicircular modules joined to one another by rotary rollers (6) which in turn clamp the respective ends of the reels (3) determining the rotation thereof
- Fixed connections (7) formed by three plugs coupled to one of the supports (5) of the reel (3) where plug-in terminals of other electric units can be connected. If the mobile unit (1) has more than one reel (3), these reels can be joined to one another by means of interconnecting jumpers (8) consisting of plug-in terminals provided for such purpose.
- Free connections (9) formed by the three plug-in terminals provided on the free tip of the cable (4) which can be plugged into other electric units directly or by using auxiliary jumpers as adaptors for different existing plug configurations.
- Earthing equipment formed by wire screens (18) and an equipotential ring (10) that will be detailed below, assuring the earthing of possible shunts.
- Protective covers (11) consisting of a lid incorporated on the entire trailer (1) or on each of the reels (3) protecting the cable and the connection mechanisms from the weather.
- Cabinet (12) of auxiliary elements housing therein the auxiliary tools necessary for putting the equipment into service, comprising:
   - Cable-covering protectors which are used for covering and protecting the cables in vehicle passages (roads, highways, streets, etc.).
   - Rollers for laying cables more easily along the entire length thereof, reducing friction resulting from pulling and preventing the cable from deteriorating due to friction.
   - Connecting auxiliary jumpers for connecting the different existing high- and medium-voltage plug configurations and serving as an adaptor once it is connected to the free tip of the cable (4).
   - Clips and rods necessary for earthing the equipotential ring of the unit as an earth connection system.
   - Other elements, for example, an array of protection and safety elements necessary for operators (boots, gloves, helmet, etc.).

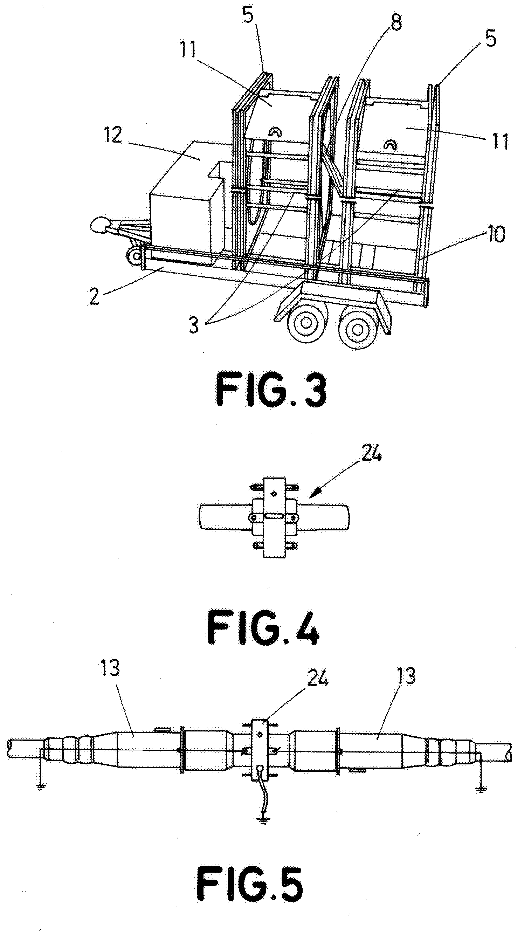

As regards the characterizing details of the mobile unit (1) of the invention, it is important to point out that in the event that the invention has more than one reel (3), these reels can be interconnected, as described above, by means of interconnecting jumpers (8) which consist of cables the tips of which have been prepared with female plug-in terminals (13) joining the fixed connections (7) of the reels (3) which have been prepared with other female plug-in terminals (13), both terminals (13) being joined together by means of biconic connectors (24), as observed in Figures 4 and 5.

These connecting jumpers therefore work as connectors between the reels (3), assuring electrical continuity through them, and also provide the possibility of being disconnected, converting the reels into independent units, each of which with a fixed point of connection and another mobile point of connection, such that they can work in parallel.

Furthermore, when the reels (3) of one and the same unit are interconnected to one another, they are joined by connecting rods (14), making their movement integral with one another and converting the two reels into a single reel, since they cause the reels to rotate at the same time. Furthermore, the cable (4) located therein is arranged such that the free tip of the first reel emerges from the upper part of the reel, and the free tip of the second reel emerges from the lower part. The cable of the two reels can thus be unwound at the same time onto an extension piece the length of which is the sum of the length of both cables.

When the reels (3) are disconnected and the connecting rods (14) are removed, each reel works independently and the length to be extended is the length of the cable (4) of each of said cable independently.

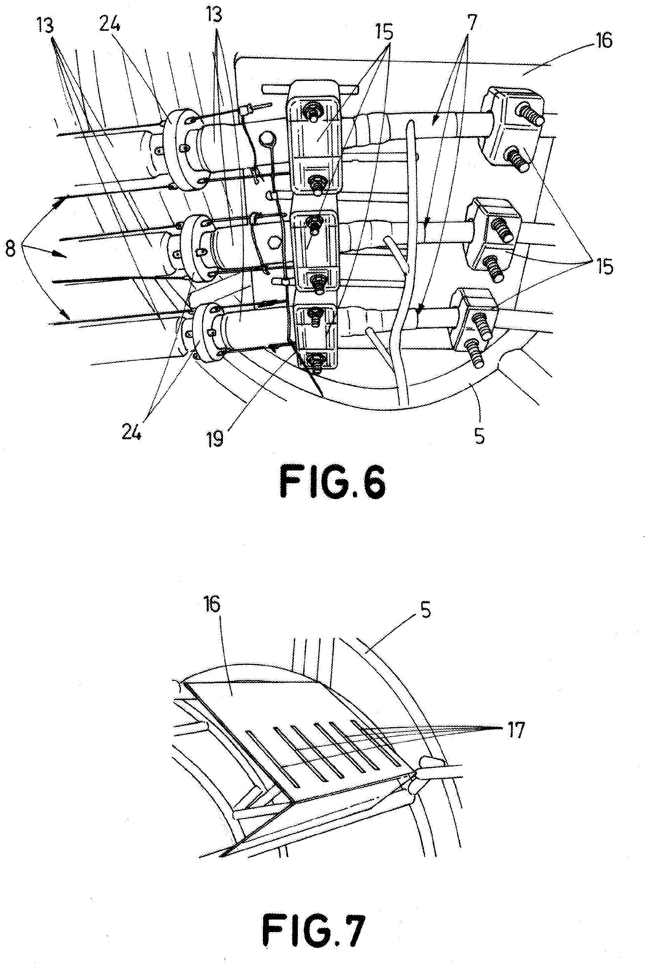

The three phases of the fixed connections (7) are secured to the structure of the support (5) of the reel (3) by means of synthetic clamps (15) screwed to the support platform (16) of the terminals (13), three clamps holding the strands in the trifurcation of the cable, preferably with a tightening of 5 Nm, and three other clamps with manual tightening in the terminals being contemplated, all these being seen in Figure 6.

Said support platform (16) is in turn located at one of the ends of each reel (3) and, as observed in Figure 7, it is designed with grooves (17) where the aforementioned clamps (15) holding the terminals (13) are screwed to make sliding the plug-in terminals easier during the operations of connecting and disconnecting the interconnecting jumper (8).

In said interconnecting jumper (8), the wire screens (18) of the earth connections of the cables are also joined at one and the same point by means of a connecting part (21), allowing the continuity of the earth connections. Furthermore, each of the plug-in terminals (13) is in contact with the screen of the earth connections of the cables by means of small bypasses (19) that stem from the cable to the button shielding the terminals.

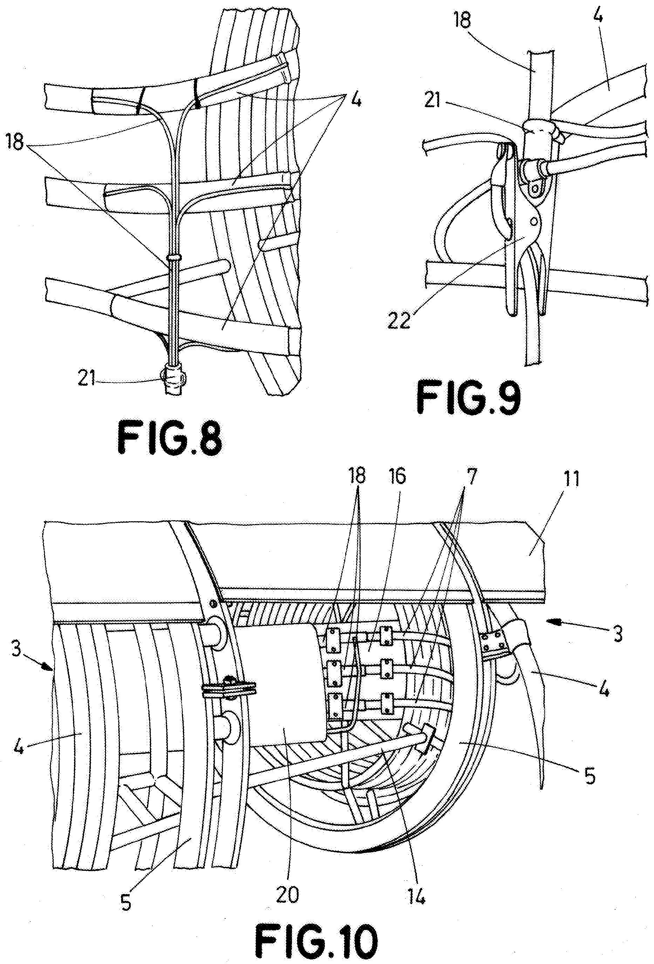

According to another particularity of the invention, the interconnecting jumpers (8) are covered by an insulating blanket protector (20), as can be observed in Figure 10, which allows access to the connecting part (21) of the wire screens (18) to enable earthing the equipotential ring (10) by means of connecting clips (22), as shown in Figure 9.

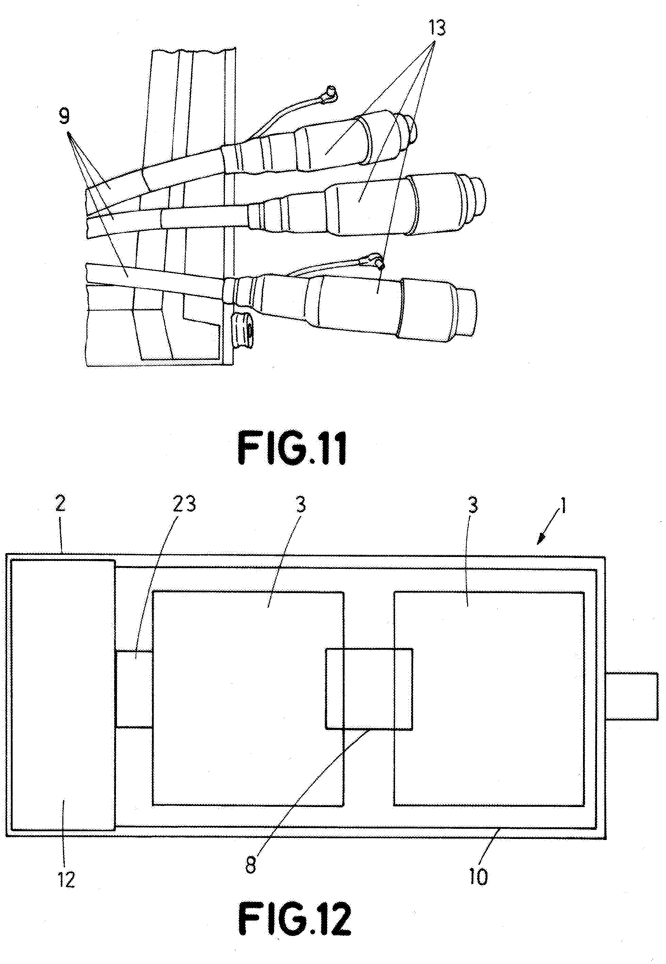

Like in the fixed connection (7), the extendable end of the cable (4) wound onto the reels (3) is in turn formed by three free connections (9) provided with straight, plug-in terminals (13), which in this case are free, as observed in Figure 11, and are the accessory that will be connected to the corresponding fixed or mobile centers, both for collecting energy from said centers and for powering other centers. Optionally, these free connections (9) of the cable (4) are also protected by means of an insulating blanket (20).

Said terminals (13) of the free end of the cable (4) can be connected directly to apparatus with standard, type-C bushings for 250 A terminals, or to any other connection through the different connecting auxiliary jumpers located in the cabinet (12).

Said auxiliary jumpers, which are not depicted in the drawings as they comprise elements which have already been described, preferably comprise a cable section with an approximate length of 2 meters and are configured with straight terminals at one end to be connected with the terminals (13) of the fixed connections (7) or of the free connections (9) of the mobile unit (1) through a biconic connector (24), as shown in the example of Figure 5, and with different connection configurations at the opposite end, these preferably being the following:
- Straight 250 A terminal for connection to bushings for direct access with a type A interface;
- Bent 250 A terminal for connection to bushings for angular access with a type A interface;
- Bent 630 A terminal for connection to bushings for angular access with a type C interface;
- Inner 24 KV termination for connection to bolts, busbars and terminals;
- Tip of an insulated cable for the preparation of any terminal or connector accessory.

On another note, as has already been described above, the mobile unit (1) has an equipotential ring (10) which, as observed in Figure 12, is in contact with the structure of the trailer (2), being located inside same surrounding the reels (3). Furthermore, after the cabinet (12) of auxiliary elements there is arranged a small reel which, in order to distinguish it, is called an earth reel (23), which incorporates, wound onto same, an insulated copper cable about 25 meters in length which is not depicted, which has a connecting sleeve every 4 meters and the corresponding jaws on the free tip thereof for holding the earthing rod, and in the reel itself for holding the sleeve closer and thus obtaining the smallest possible distance in the path of the earth circuit between said earth reel (23) and the rod.

The wire screen (18) of each of the phases of the 3-pole cable (4) in turn maintains continuity with the wire screen of the interconnecting jumpers (8) or with auxiliary jumpers by means of connecting parts (21), if any, which as described above for the case of the interconnecting jumpers (8) allows being joined to the equipotential ring (10) by means of clips (22).

Having sufficiently described the nature of the present invention as well as the manner of putting it into practice, it is not considered necessary to further describe the invention so that a person skilled in the art can comprehend the scope thereof and advantages derived from it, stating that it could be carried out to practice within its essential features in other embodiments differing in detail from that indicated by way of example, and such embodiments would be covered by the protection that is sought provided that the fundamental principle, as defined in the appended claims, thereof is neither altered, changed nor modified.

## Claims

1. A mobile unit for high- and medium-voltage electrical interconnection, applicable as a connecting extension piece or jumper for transporting electric current between an electrically connected point and another point to be electrically connected, of the type comprising: a trailer (2); one or more freely rotating metal reels (3) onto which a conductor cable (4) is wound to allow winding and unwinding; fixed connections (7) formed by plugs coupled to the reels (3) where plug-in terminals of other electric units can be connected; free connections (9) formed by plug-in terminals provided on the free tip of the cable (4) and they can be plugged into other electric units directly or by using jumpers, as adapters for plug configurations; earthing equipment formed by a wire screen (18) and an equipotential ring (10) for earthing possible shunts; a cabinet (12) of auxiliary elements; protective covers (11); and supports (5) for the reels (3), **characterized in that** the cabinet (12) of auxiliary elements houses cable-covering protectors, roller for laying cable, connecting auxiliary jumpers, clips and rods for forming the equipotential ring; **in that** the cable (4) is a highly flexible 3-pole cable; **in that** it comprises reels (3) incorporated on supports (5), each of which comprises two semi-circular modules joined to one another by rotating rollers (6) which in turn clamp the respective ends of the reels (3), determining the rotation thereof; **in that** it comprises interconnecting jumpers (8) consisting of plug-in terminals provided for connecting, when they are incorporated, two or more reels (3) to one another; and **in that** when two or more reels (3) of the unit are interconnected, it incorporates removable connecting rods (14) making their movement integral with one another, and when the reels (3) are disconnected, each reel works independently.

2. The mobile unit for high- and medium-voltage electrical interconnection, according to claim 1, **characterized in that** the interconnecting jumpers (8) consist of cables the tips of which have been prepared with female plug-in terminals (13) joining the fixed connections (7) of the reels (3), which have been prepared with other female plug-in terminals (13), both terminals (13) being joined together by means of biconic connectors (24).

## Patentansprüche

1. Mobile Einheit zur elektrischen Verbindung von Hoch- und Mittelspannung, die als verbindendes Verlängerungsstück oder als Brückendraht zum Transport von elektrischem Strom zwischen einem elektrisch verbundenen Punkt und einem anderen elektrisch zu verbindenden Punkt anwendbar ist, umfassend: einen Nachlauf (2); eine oder mehrere frei drehbare Metallspulen (3), die von einem Flachkabel (4) umwickelt sind, das auf- und abgewickelt werden kann; feste Verbindungen (7), die von an die Spulen (3) gekoppelten Steckern gebildet werden, wobei Einsteckklemmen anderer elektrischer Einheiten verbunden werden können; freie Verbindungen (9), die von am freien Spitze des Kabels (4) vorgesehenen Einsteckklemmen gebildet werden und in andere elektrische Einheiten direkt oder unter Verwendung von Brückendrähten als Adapter für Steckerbelegungen gesteckt werden können; eine Erdungseinrichtung, die von einem Drahtschirm (18) und einem Äquipotentialring (10) zur Erdung eventueller Nebenschlüsse gebildet wird; einen Schaltschrank (12) für Nebenelemente; Schutzabdeckungen (11); und Träger (5) für die Spulen (3), **dadurch gekennzeichnet, dass** der Schaltschrank (12) für Nebenelemente Kabel abdeckende Überspannungsschutzeinrichtungen, Rollen zur Kabelverlegung, zusätzliche verbindende Brückendrähte, Klammern und Stäbe zum Aufbau des Äquipotentialrings aufnimmt; dass das Kabel (4) ein hochflexibles 3-poliges Kabel ist; dass sie Spulen (3) umfasst, die in Trägern (5) eingebaut sind, die jeweils zwei halbkreisförmige Module umfassen, die mittels rotierender Rollen (6) aneinandergefügt sind, die ihrerseits die entsprechenden Enden der Spulen (3) einklemmen und somit deren Drehung bestimmen; dass sie verbindende Brückendrähte (8) umfasst, die aus Einsteckklemmen bestehen, um im eingebauten Zustand zwei oder mehrere Spulen (3) miteinander zu verbinden; und dass sie, wenn zwei oder mehrere Spulen (3) der Einheit miteinander verbunden sind, lösbare Verbindungsstäbe (14) einbaut, die eine integrale Bewegung derselben ermöglichen, und dass, wenn die Spulen (3) nicht verbunden sind, die Spulen unabhängig voneinander arbeiten.

2. Mobile Einheit zur elektrischen Verbindung von Hoch- und Mittelspannung nach Anspruch 1, **dadurch gekennzeichnet, dass** die verbindenden Brückendrähte (8) aus Kabeln bestehen, deren Spitzen mit weiblichen Einsteckklemmen (13) versehen worden sind, die an die festen Verbindungen (7) der Spulen (3) angefügt werden, die mit anderen weiblichen Einsteckklemmen (13) versehen worden sind, wobei beide Klemmen (13) über bikonische Stecker (24) aneinandergefügt werden.

## Revendications

1. Unité mobile pour interconnexion électrique de haute et moyenne tension, applicable comme une pièce d'extension de connexion ou cavalier pour transporter du courant électrique entre un point relié électriquement et un autre point à relier électriquement, du type comprenant : une amorce (2); une ou plusieurs bobines de métal à rotation libre (3) sur lesquelles un câble conducteur (4) est enroulé pour permettre le bobinage et le débobinage; des connexions fixes (7) formées par des fiches couplées aux bobines (3) où des bornes enfichables d'autres unités électriques peuvent être connectées; des connexions libres (9) formées par des bornes enfichables prévues sur l'embout libre du câble (4) et elles peuvent être enfichées dans d'autres unités électriques directement ou en utilisant des cavaliers en guise d'adaptateurs pour des configurations de fiches; des dispositifs de mise à terre formés par un treillis métallique (18) et un anneau équipotentiel (10) pour la mise à terre d'éventuels shunts; une armoire (12) d'éléments auxiliaires; des couvercles protecteurs (11); et des supports (5) pour les bobines (3), **caractérisée en ce que** l'armoire (12) d'éléments auxiliaires loge des protecteurs de câble gainé, un rouleau pour la pose de câble, des cavaliers auxiliaires de connexion, des clips et des barres pour la formation de l'anneau équipotentiel; **en ce que** le câble (4) est un câble tripolaire très flexible; **en ce qu'**elle comprend des bobines (3) incorporées sur des supports (5), chacun desquelles comprend deux modules semi-circulaires reliés l'un à l'autre par des rouleaux rotatifs (6) qui à leur tour fixent les extrémités respectives des bobines (3), déterminant leur rotation; **en ce qu'**elle comprend des cavaliers d'interconnexion (8) consistant en des bornes enfichables prévues pour connecter, lorsqu'elles sont incorporées, deux ou plusieurs bobines (3) entre elles; et **en ce que** lorsque deux ou plusieurs bobines (3) de l'unité sont interconnectées, elle incorpore des tiges de connexion amovibles (14) en faisant que leur mouvement soit solidaire entre elles, et lorsque les bobines (3) sont déconnectées, chaque bobine fonctionne indépendamment.

2. Unité mobile pour interconnexion électrique de haute et moyenne tension, selon la revendication 1, **caractérisée en ce que** les cavaliers d'interconnexion (8) consistent en des câbles dont les embouts ont été préparés avec des bornes enfichables femelles (13) reliant les connexions fixes (7) des bobines (3), qui ont été préparées avec d'autres bornes enfichables femelles (13), les deux bornes (13) étant reliées ensemble par le biais de connecteurs biconiques (24).
